# EUROPEAN PATENT SPECIFICATION

(11) **EP 4 462 996 B1**
(45) Date of publication and mention of the grant of the patent: **13.08.2025**
(21) Application number: 23700435.3
(22) Date of filing: 05.01.2023
(51) Int. Cl.: A01K 61/80, A01K 63/06, A23K 20/105, A23K 20/20, A23K 40/30, A23K 50/80

(54) **AQUACULTURE SYSTEM AND METHOD FOR FEEDING AN AQUATIC ANIMAL**
AQUAKULTURSYSTEM UND VERFAHREN ZUR FÜTTERUNG EINES WASSERTIERES
SYSTÈME D'AQUACULTURE ET PROCÉDÉ D'ALIMENTATION D'UN ANIMAL AQUATIQUE

(30) Priority: 10.01.2022 EP 22150639
(43) Date of publication of application: 20.11.2024
(73) Proprietor: Signify Holding B.V., 5656 AE Eindhoven (NL)
(72) Inventor: BROERS, Harry, 5656 AE Eindhoven (NL); DE SAMBER, Marc, Andre, 5656 AE Eindhoven (NL)
(74) Representative: Verweij, Petronella Daniëlle
(86) International application number: PCT/EP2023/050144
(87) International publication number: WO 2023/131633

(56) References cited:
- IT-A1- RM20 110 123
- JP-A- 2019 198 279
- US-A1- 2016 120 157
- US-A1- 2017 086 430

## Description

### FIELD OF THE INVENTION

The invention relates to an aquaculture system for hosting an aquatic animal. The invention further relates to an aquaculture arrangement comprising the aquaculture system and feed. The invention further relates to a method for feeding an aquatic animal.

### BACKGROUND OF THE INVENTION

Aquaculture systems are known in the art. For instance, US2017/086430A1 describes a method of feeding larval fish in an artificial habitat that is provided with light sources. For instance, US9185888B2 describes a lighting assembly for enhancing the growth of aquatic life in an ecosystem. The assembly includes a vessel submerged within water of the ecosystem. A substrate is disposed within and surrounded by the vessel and provides electronics to provide a conditioned current to a plurality of light emitting diodes also contained on the substrate. The light emitting diodes emit light within the water of the ecosystem.

### SUMMARY OF THE INVENTION

One of the challenges in aquaculture may be the optimal provision of feed to aquatic animals. Because of environmental conditions of the water (e.g., presence of small particles, high turbidity conditions) and the density of aquatic animals in tanks, feed may be poorly visible for the aquatic animals. This poor visibility may lead to a loss of feed (sinking to the bottom) resulting in a reduced feeding efficiency, such as due a reduced feed-to-food conversion, and also, because of degradation of that lost feed, potential contamination of the water, which may pose health challenges to the aquatic animals, and which may (further) increase the turbidity of the water.

The prior art may describe approaches to stimulate feeding by the aquatic animals. For instance, the prior art may describe providing elevated light levels to improve visibility of the food by emphasizing contrast between feed and non-feed. However, such approaches may be energy-intensive and may have limited efficacy in turbid and/or crowded basins.

The prior art may further describe approaches to modify feed to make the feed more appealing to a particular aquatic animal. However, such approaches may require tailoring of the feed for different aquatic animals, and may pose a relatively large cost relative to the cost of the feed itself.

In addition, prior art solutions may provide a static change to which an aquatic species may acclimate, i.e., an improved response from the aquatic species may be temporary.

Hence, it is an aspect of the invention to provide an alternative aquaculture system, which preferably further at least partly obviates one or more of above-described drawbacks. The present invention may have as object to overcome or ameliorate at least one of the disadvantages of the prior art, or to provide a useful alternative.

Hence, in a first aspect, the invention provides according to independent claim 1 an aquaculture system for hosting an aquatic species, especially an aquatic animal. The aquaculture system comprises a basin configured to host water and the aquatic animal, and a light generating system configured to provide system light to (the water in) the basin. The system light has controllable polarization. In an operational mode of the light generating system, the light generating system is configured to provide system light sequentially having M different polarization states, especially wherein M ≥ 2, and especially wherein at least part of the M different polarization states are provided consecutively for time periods (individually) selected from the range of 0.005 - 10 seconds.

In particular, the aquaculture system of the invention is configured to change the polarization direction, especially at a high frequency, which may cause illuminated feed to be perceived as 'sparkling'. Hence, during feeding of the aquatic animals, such as fish, the polarization may be varied to make the feed appear 'sparkling', resulting in not only a higher visibility of the feed but also resulting in a more active response of the fish to the feed (in particular in predatory fish species that may react to the sparkling feed as if it is a prey animal species).

For instance, in nature, small fish (being prey for e.g. salmon or tuna) may also appear sparkling because of the reflection of their (often silver/metal like) body and their movements/changes in direction during swimming (their reflective body changes optical axis, which may lead to on/off reflection towards the predator). The aquaculture system of the invention may provide a similar effect for much more stationary prey, such as artificial feed that swirls down or floats in the water.

The feed may naturally sparkle as a result of the polarization system actuation, but this sparkling may also be further enhanced by providing a material or finish modification to make the feed, such as feed pellets, 'shinier', e.g., by applying a glycerin (like) coating on the feed (pellets).

Throughout the application, said basin may for example be an artificial pond. Throughout the application, said basin may for example be a natural water basin, a lake, a waterway, a lagoon, a pond, a water enclosure, at least part of a sea or ocean.

Further , the dynamic light conditions and light changes may invoke a stronger and more resilient response from the aquatic species, particularly from predatory aquatic animals, which may often strongly respond to movement.

The invention provides an aquaculture system for hosting an aquatic animal, the aquaculture system comprising a basin configured to host water and the aquatic animal, and a light generating system configured to provide system light to the basin, wherein the system light has controllable polarization, and wherein in an operational mode of the light generating system the light generating system is configured to provide system light sequentially having M different polarization states, wherein M ≥ 2, and wherein at least part of the M different polarization states are provided consecutively for time periods selected from the range of 0.005 - 10 seconds.

Hence, the invention provides an aquaculture system. The term "aquaculture" relates herein to the controlled cultivation of aquatic species, especially specifically aquatic animals. In particular, aquaculture may herein refer to the cultivation of aquatic species under controlled or semi-natural conditions, including under mariculture conditions.

The aquaculture system is configured for hosting an aquatic species, especially an aquatic animal. The aquatic animal may especially be selected from the group comprising fish, crustaceans, and mollusks. In particular, in specific embodiments, the aquatic animal may comprise a fish, especially a fish selected from the group comprising carp, salmon, tuna, tilapia, seabass, seabream, and catfish.

Hence, the aquaculture system comprises a basin configured to host the aquatic species. In particular, the basin may be configured to host water and the aquatic species. The term "basin" refers herein to any artificial or natural enclosure suitable to host the aquatic species. In embodiments, the basin may especially comprise an artificial enclosure, such as a sea cage.

The aquaculture system further comprises a light generating system configured to provide system light to (water in) the basin. The light generating system especially comprises one or more light sources configured to (together) provide the system light.

The system light has a controllable polarization. In particular, the light generating system may be configured to control the polarization of the system light. In embodiments, the light generating system may be configured to provide the system light with different polarization states. For instance, during a first time period the light generating system may (be configured to) provide system light having a first polarization state, and during a second time period the light generating system may (be configured to) provide system light having a second polarization state. In particular, two polarization states may herein be considered to be different if they differ in terms of one or more of (i) degree of polarization, such as their polarization extinction ratio, (ii) direction of polarization, (iii) spectrum of polarization, and (iv) type of polarization, such as linear polarization, elliptical polarization, and circular polarization.

The term "spectrum of polarization" refers herein to a selective polarization of certain wavelengths of light, such as a polarization of a (proper) subset of the wavelengths in the system light. Such polarization may have synergetic effects as certain color choices may also statically improve the visibility of the feed because of animals' perception physiology, environmental conditions (e.g., bright colors in deeper water, achieving better contrast versus background, etc.)

In embodiments, the M polarization states comprise a first polarization state P1 and a second polarization state P2, wherein the first polarization state P1 and the second polarization state P2 differ in one or more of their (i) degree of polarization, (ii) direction of polarization, (iii) spectrum of polarization, and (iv) type of polarization. In embodiments, P1 and P2 may differ at least in their degree of polarization. In further embodiments, P1 and P2 may differ at least in their direction of polarization. In embodiments, P1 and P2 may differ at least in their spectrum of polarization. In embodiments, P1 and P2 may differ at least in their type of polarization.

In particular, the first polarization state P1 and the second polarization state P2 may differ at least such that the aquatic species can (visually) perceive the difference between the first polarization state P1 and the second polarization state P2. It will be clear to the person skilled in the art that the visibly discernable difference may depend on the aquatic species. For instance, (interneurons of) a cricket may respond strongly to a polarization changes of < 1° in a rotating e-vector, such as described in Marshall and Cronin, "Polarisation vision", Current Biology, 2011. Similarly, for instance a human eye may be able to discriminate between areas of linear polarization differing in electric field vector orientation by as little as 4.4°, such as described in Mission and Anderson, "The spectral, spatial and contrast sensitivity of human polarization pattern perception", Scientific Reports, 2017.

The first polarization state P1 and the second polarization state P2 may, for instance, differ in that the first polarization state P1 relates to (essentially) unpolarized light and, for example, that the second polarization state relates to linearly polarized light. Hence, the term "polarization state" may herein also refer to a state of the system light wherein the system light is (essentially) unpolarized.

For instance, in embodiments, the first polarization state P1 and the second polarization state P2 may differ in that the system light in the first polarization state P1 has an orthogonal polarization to the system light in the second polarization state P2. For instance, the system, especially the light generating system, may comprise two orthogonal light sources, wherein the system, especially the light generating system, is configured to alternately drive the two orthogonal light sources during the operational mode.

In embodiments, the first polarization state and the second polarization state may each individually be selected from linear polarized system light, elliptical polarized system light, circular polarized system light, and unpolarized system light, wherein the first polarization state and the second polarization state differ. In (other) embodiments, the first polarization state and the second polarization state may each individually be selected from linear polarized system light, elliptical polarized system light, and circular polarized system light, wherein the first polarization state and the second polarization state differ.

Note that the phrase "the first polarization state and the second polarization state" may in embodiments refer to two different types of polarization (including in specific embodiments one of the state with unpolarized system light), but may not exclude other embodiments wherein there are more than two different polarization states.

In embodiments, the system light may be (at least partially) polarized in each of the M different polarization states.

In embodiments, the system, especially a control system (comprised by the system) may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another operational mode, or a plurality of other operational modes. Likewise, this does not exclude that before executing the mode and/or after executing the mode one or more other modes may be executed. However, in embodiments a control system (see further also below) may be available, that is adapted to provide at least the operational mode. Would other modes be available, the choice of such modes may especially be executed via a user interface, though other options, like executing a mode in dependence of a sensor signal or a (time) scheme, may also be possible. The operational mode may in embodiments also refer to a system, or apparatus, or device, that can only operate in a single operation mode (i.e. "on", without further tunability).

Hence, in embodiments, the system may comprise a control system. The control system may especially be configured to control the light generating system. **In** embodiments, the control system may be further configured to control a feed providing system.

The term "controlling" and similar terms herein may especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. **In** embodiments, the control system and the element may not be physically coupled. Control can be done via wired and/or wireless control. The term "control system" may also refer to a plurality of different control systems, which especially are functionally coupled, and of which e.g. one master control system may be a control system and one or more others may be slave control systems.

In embodiments, especially in the operational mode (of the light generating system), the light generating system may (be configured to) provide system light sequentially having M different polarization states, especially wherein M ≥ 2. Hence, the light generating system may be configured to vary the polarization state of the system light (between the M different polarization states), especially during the operational mode. The different polarization states may temporally be arranged to directly follow on one another (successively), but may also be temporally arranged with one or more intermittent pauses during which the light generating system does not provide the system light.

In particular, in embodiments, at least part of the M different polarization states may be provided consecutively for time periods selected from the range of 0.005 - 10 seconds, such as from the range of 0.01 - 5 seconds, especially from the range of 0.02 - 4 seconds. In further embodiments, the time periods may be at least 0.005 seconds, such as at least 0.01 seconds, especially at least 0.02 seconds, such as at least 0.03 seconds, especially at least 0.05 seconds. In further embodiments, the time periods may be at most 10 seconds, such as at most 7 seconds, especially at most 5 seconds, such as at most 4 seconds, especially at most 3 seconds. In further embodiments, the time periods may be at most 2 seconds, such as at most 1.5 seconds, especially at most 1 second, such as at most 0.5 seconds.

The time periods of the M different polarization states may especially be selected to provide a sparkling visual stimulus to an aquatic species, especially an aquatic animal, in the basin. It will be clear to the person skilled in the art that the frequencies suitable to provide a sparkling visual stimulus may depend on the aquatic species, and optionally also on feed in the basin.

For instance, the time periods may be selected in view of the critical flicker frequency CFF of the aquatic species. The term "critical flicker frequency" refers herein to the frequency at which a flickering light, for a specific visual system, is indistinguishable from a non-flickering light, i.e., the frequency at which a flickering light is perceived as constant. Hence, changing between two polarization states at a frequency higher than the critical flicker frequency of an aquatic species hosted in the basin may inadvertently result in the aquatic species perceiving the changing system light as constant.

Similarly, if the polarization state is changed at a (relatively) low frequency, such as once a minute, the system light may also be perceived by the aquatic species as (essentially) constant. It will be clear to the person skilled in the art that this range may also depend on the aquatic species.

Hence, the time periods may especially be selected to provide a sparkling (or "flickering") visual stimulus to the aquatic species.

In further embodiments, especially in the operational mode, the light generating system may (be configured to) provide the system light during N sequential stages. In particular, the light generating system may (be configured to) provide during each of the N different stages the system light with one of the M different polarization states. The N sequential stages may temporally be arranged to directly follow on one another (successively), but may also be temporally arranged with one or more intermittent pauses during which the light generating system does not provide the system light. In particular, in embodiments, the light generating system may (be configured to) provide system light with different polarization states in temporally adjoining stages of the N sequential stages.

For instance, if the M different polarization states comprise polarization states "A", "B", "C", and "D", and if N=10, then the N sequential stages could, for example, comprise any one of the following patterns: two alternating polarization states: ABABABABAB; three alternating polarization states: ABCABCABCA; a base state and multiple intermittent states: ABACADABAC; and a (semi-)random arrangement of polarization states: ADBACBDBAC. As mentioned above, a polarization state may also relate to (essentially) unpolarized system light. Hence, for instance, "A" could refer to unpolarized system light, and "B", "C" and "D" could refer to system light which differ in their polarization, such as in their polarization direction and/or polarization type.

In embodiments, (at least part of) the N sequential stages, especially each stage of the N sequential stages, may have time periods individually selected from the range of 0.005 - 10 seconds, such as from the range of 0.01 - 5 seconds, especially from the range of 0.02 - 4 seconds. In further embodiments, the time periods may be at least 0.005 seconds, such as at least 0.01 seconds, especially at least 0.02 seconds, such as at least 0.03 seconds, especially at least 0.05 seconds. In further embodiments, the time periods may be at most 10 seconds, such as at most 7 seconds, especially at most 5 seconds, such as at most 4 seconds, especially at most 3 seconds. In further embodiments, the time periods may be at most 2 seconds, such as at most 1.5 seconds, especially at most 1 second, such as at most 0.5 seconds. In specific embodiments, the time periods may be selected from the range of 0.01 - 2 seconds.

In further embodiments, especially in the operational mode, the light generating system may (be configured to) switch between the M different polarization states of the system light according to a frequency f, especially wherein f is selected from the range of 0.1 - 100 Hz, such as from the range of 0.3 - 90 Hz, especially from the range of 0.5 - 80 Hz, such as from the range of 1 - 70 Hz. The phrase "wherein the light generating system switched between the M different polarization states of the system light according to a frequency f" and similar phrases here do not imply that the switching is at a regular interval, but rather refers to a number of switches within a given time period, such as per second. Hence, different polarization states of the M different polarization states may be presented for different time periods. In particular, the switching movements between different polarization states of the M different polarization may be irregularly spaced in time, i.e., arranged at varying intervals. However, in embodiments, the light generating system may (be configured to) switch between the M different polarization states of the system light according to the frequency f, wherein switching moments are regularly spaced in time.

As mentioned above, the time periods may be selected in view of the critical flicker frequency. In particular, the frequency f may be selected in view of the critical flicker frequency CFF of the aquatic animal. Hence, in further embodiments, the aquatic animal may have a critical flicker frequency CFF, and f < CFF.

Hence, in embodiments, the frequency f may be selected to be below the critical flicker frequency of the aquatic animal, such as < 80 Hz for yellowfin tuna, or such as < 14 Hz for European Eel, or such as < 75 Hz for a (sea) bass.

In further embodiments, the frequency f may be at least 0.1 Hz, such as at least 0.3 Hz, especially at least 0.5 Hz, such as at least 1 Hz, especially at least 2 Hz. In further embodiments, the frequency f may be at most 120 Hz, especially at most 100 Hz, such as at most 90 Hz, especially at most 80 Hz, such as at most 70 Hz.

In embodiments, the light generating system may comprise an optical element configured to set the polarization state of the system light. For instance, in embodiments, the optical element may be configured moveable into a path of the system light to affect a polarization state of the system light. In further embodiments, the optical element may be configurable in a plurality of different element states, wherein the different element states result in different polarization states of the system light.

In further embodiments, the light generating system may comprise a rotating polarizer, wherein the rotating polarizer is configured to control the polarization of the system light. In particular, the rotating polarizer may be arranged in a light path of a light source of the light generating system. A rotating polarizer may be particularly convenient for sequentially varying the polarization state of the system light.

In embodiments, especially in the operational mode, the light generating system may be configured to provide the system light through a (rotating) polarizer, and to rotate that polarizer, especially such that the system light sequentially various in polarization state. In particular, in such embodiments, due to the rotating of the polarizer, (essentially) all polarization directions along that rotation may be reached. In general, some of the polarization directions may lead to reflection/extinction of the system light depending on the feed optical properties of the feed.

**In** further embodiments, the light generating system may be configured to rotate the (rotating) polarizer at frequency f, i.e., at f rotations/second. As described above, f may especially be smaller than the CFF of the aquatic species.

**In** further embodiments, the light generating system may comprise a plurality of (laser) light sources configured to provide system light with different polarization states, wherein the light generating system is configured to independently control the plurality of (laser) light sources to control the polarization states of the system light. **In** particular, in embodiments, the light generating system, especially the control system, may sequentially switch the plurality of light sources on and off to control the system light. Such systems may be easier to operate (electronically) and may have a longer lifetime as no moving parts are needed.

The system light may primarily be provided for the vision of an aquatic species, such as an aquatic animal, residing in the basin. Hence, a wavelength range of the system light may be selected in view of the visual range of the aquatic species. It will be clear to the person skilled in the art that the visual range may differ between different aquatic species, amongst others dependent on the typical depth of their natural habitats and the wavelengths of natural light that may reach such depths.

Hence, in embodiments, at least 80%, such as at least 90%, of a total intensity of the system light may lie in a first wavelength range, especially wherein the first wavelength range is the visual range of the aquatic species.

Some aquatic species, such as some fish, may perceive light in the UV range. Similarly, some aquatic species, such as some fish, may perceive light in the IR range. Hence, in embodiments, the first wavelength range may be the range of 200 - 1000 nm, such as from the range of 300 - 900 nm, especially from the range of 360 - 700 nm.

In embodiments, the aquaculture system, especially the basin, may be configured for hosting an aquatic animal selected from the group comprising a fish, a crustacean, and a cephalopod, especially a fish.

In embodiments, the aquaculture system may further comprise a feed providing system, especially wherein the feed providing system is configured to provide feed to (water in) the basin. The feed providing system may especially comprise a feed dispenser configured to provide (or "dispense") the feed to (water in) the basin.

In such embodiments, the aquaculture system, especially the control system, may (be configured to) control both the feeding of the aquatic species by providing feed, as of the aquatic species. In particular, the provision of the feed and the varying of the polarization states of the system light may be temporally orchestrated to stimulate feeding.

The visual stimuli resulting from exposing the feed to varying polarization states may also depend on feed properties. For instance, feed with a glossy surface may more readily appear sparkling to an aquatic species than feed with a non-glossy surface.

In aspects, said glossy surface may e.g. be high gloss >70 Gloss Units (GU), or e.g. at least medium gloss >25 Gloss Units (GU), measured at 60 degrees glossiness measurement angle. The concept of glossiness, as described in standards, may be apparent to the person skilled in the art. Said non-glossy surface may be a surface <10 Gloss Units (GU).

Hence, in embodiments, especially in the operational mode, the aquaculture system may (be configured to) acquire a feed optical property of the feed. In such embodiments, especially in the operational mode, the light generating system may be configured to control the system light based on the feed optical property.

In particular, in embodiments, the light generating system may be configured to control the system light based on the color of the feed. In particular, the system light may have a light spectrum, wherein at least part of wavelengths in the light spectrum are (at least partially) reflected by the feed. Thereby, the feed may be contrasted from its environment, which may increase the visibility of the feed for the aquatic species, and may appear colored rather than dark/grey/brown, which may increase the appeal of the feed for the aquatic species.

The aquaculture system may (be configured to) acquire the feed optical property in a variety of ways. For instance, in embodiments, the aquaculture system, especially the control system, may comprise a user interface configured for receiving a user input related to the feed optical property. In further embodiments, the aquaculture system may comprise a scanning element configured to scan a tag corresponding to the feed (package), and to retrieve the feed optical property from an (external) database. In further embodiments, the aquaculture system, especially the feed providing system, may comprise a sensor element configured to sense a parameter related to the feed optical property and to provide a related signal to the control system, especially wherein the control system is configured to determine the feed optical property based on the related signal. In further embodiments, the aquaculture system, especially the control system, may have access to a feeding schedule comprising information on the feed optical property of the (to-be-provided) feed.

The term "related signal" refers herein to a signal that is related to the detected parameter. In particular, the related signal may comprise raw and/or processed data related to the (detected) parameter.

In general, the feed may comprise typical fish feed, such as pellets and/or flakes. Hence, in embodiments, the feed may comprise pellets and/or flakes, especially pellets, or especially flakes. In embodiments, the feed may comprise live feed, such as insects, worms and (smaller) fish.

In embodiments, the feed may comprise a modification, wherein the modification changes a feed optical property of the feed. In particular, in embodiments, the modification may be selected from the group comprising a coating, a surface smoothening, a bulk composition, and a porosity increase. Such modifications may provide (or "enhance") a visual effect when the feed is sequentially exposed to system light with different polarization states.

For instance, in embodiments, the modification may comprise a coating selected from the group comprising a glycerin coating and a TiO₂ coating. In such embodiments, the feed may be more shiny and reflective, which may largely increase the effect of dynamic polarized light.

In further embodiments, the modification may comprise a coating, wherein the coating is hydrophobic. In such embodiments, the feed may remain 'clean' and the coating may provide for a thin interface layer between the water and the feed that may induce optical effects, similar to soap bubbles.

In further embodiments, the modification may comprise a feed surface smoothening. In particular, the feed surface smoothening may increase the glossiness of the feed.

In further embodiments, the modification may comprise a porosity increase. In particular, the porosity increase may result in an entrapment of air bubbles in the feed and/or on its surface, which air bubbles may provide a distinct visual effect when sequentially exposed to different polarization states.

In embodiments, the aquaculture system, especially the feed providing system, may be configured to provide a modification to the feed, especially wherein the modification changes a feed optical property of the feed. In further embodiments, the modification may be selected from the group comprising a coating, a surface smoothening, a bulk composition, and a porosity increase.

For instance, the feed providing system may modify the bulk composition of the feed by adding glossy (or "shiny") particles to the bulk composition.

In further embodiments, the feed may comprise prey fish, especially (relatively) small prey fish, or especially live prey fish. In particular, the scales of the fish may sparkle due to sequential exposure to different polarization states, i.e., the scales of the small fish may provide a visually observable effect (for the aquatic species) when sequentially exposed to the system light with different polarization states.

In embodiments, the light generating system may have a general lighting mode. In the general lighting mode the light generating system may (be configured to) provide system light (to the basin), especially system light having a default polarization state (such as no polarization at all). Especially, in such embodiments, the aquaculture system, especially the control system, may be configured to switch the light generating system between the general lighting mode and the operational mode.

Hence, the aquaculture system, especially the light generating system, may (be configured to), during use, provide the system light. During a first time period, the system light may be default system light. For instance, the system light may have a single polarization state throughout the first time period. During a second time period, the system light may sequentially vary between the M different polarization states. The second time period may especially (at least partially) overlap with a feeding time period.

In further embodiments, the light generating system may have a night mode. In the night mode, the light generating system may (be configured to) provide system light to the basin, wherein the system light has a reduced intensity relative to the general lighting mode. In embodiments, the night mode may comprise providing (essentially) no system light to the basin.

Hence, in further embodiments, the light generating system may have a general lighting mode, a night mode, and the operational mode, especially wherein the general lighting mode, the night mode, and the operational mode are (at least partially) temporally separated.

In further embodiments, the aquaculture system may have a feeding mode. The feeding mode may especially comprise providing feed to (water in) the basin, and providing system light with sequentially varying polarization states to the basin.

In further embodiments, the feeding mode may especially comprise a feed providing stage and a feeding stage. In particular, in the feed providing stage, the feed providing system may (be configured to) provide the feed 10 to the basin 50. In the feeding stage, the light generating system 1000 may especially (be configured to) operate according to the operational mode.

Hence, in embodiments, the feed providing system may, especially in the feeding mode, (be configured to) provide the feed to the basin.

In further embodiments, the light generating system may, especially in the feeding mode, (be configured to) operate according to the operational mode, i.e., may (be configured to) provide system light sequentially having M different polarization states.

In further embodiments, the light generating system may be configured to operate according to the general lighting mode or the night mode outside of the feeding mode.

In general, for aquaculture systems, the feed may be provided from a single direction, such as via a feed providing system arranged above a basin. Hence, directly after providing the feed, the feed may be spatially restricted to a (relatively) small section of the basin, which may in turn result in the aquatic species, especially the aquatic animals, clustering in the (relatively) small section. Such local crowding may be undesirable as the fish may get injured, and as feed that is not eaten in this small section may not be noticed. In addition, if fish (e.g., salmon) start feeding near the surface of the basin (mainly in sea cages), then there may be an increased risk of surface-bound pathogens/parasites, such as sea lice, infecting/attacking the fish. For instance, sea lice may mainly reside in the top layer of the water, so feeding deeper in the water might be preferred, as the fish, such as salmon, would come up to the surface less.

Hence, in embodiments, the feeding stage may be temporally arranged at a time delay after the (onset of the) feed providing stage, especially wherein the time delay is selected from the range of ≥ 10 seconds, such as ≥ 30 seconds, especially ≥ 60 seconds. In further embodiments, the time delay may be ≤ 10 min, such as ≤ 5 min, especially ≤ 3 min, such as ≤ 2 min.

Thereby, the feed may first spread through the basin, and the aquatic species are only visually stimulated with the sequentially alternating polarized system light after the feed has been spatially distributed. Thereby, the feeding may be distributed over a larger section of the basin, which may improve comfort of the aquatic species, may reduce injuries to the aquatic species, and which may reduce feed loss.

Hence, in embodiments, the feed providing system may be configured to provide the feed to the basin, and the light generating system may be configured to execute the operational mode at a time delay after (an onset of) the dispensing of the feed by the feed providing system. In embodiments, the time delay may be selected from the range of ≥ 10 seconds, such as ≥ 30 seconds, especially ≥ 60 seconds.

The time delay may especially be selected in view of a movement rate, such as a sinking rate, of the feed and/or a dimension, such as a height, of the basin.

In further embodiments, especially during the feeding stage, the feed providing system may provide feed in a plurality of feedings bursts (or "feeding events"). In such embodiments, the time delay may especially be from (the onset of) a last feeding burst of the plurality of feeding bursts, i.e., the feeding stage may be temporally arranged at a time delay after the (onset of the) last feeding burst of the plurality of feeding bursts.

In further embodiments, the basin may be divided into a plurality of (spatially separated) feeding zones along a height (H) of the basin. Especially, in such embodiments, the light generating system may comprise a plurality of light generating devices arranged to provide system light to the plurality of feeding zones. In particular, in embodiments, the light generating system may for each feeding zone comprise one or more light generating device configured to provide system light to the (respective) feeding zone. Hence, in embodiments, the plurality of light generating devices may be configured to independently provide the system light. In further embodiments, the control system may be configured to independently control (at least part of) the plurality of light generating devices.

Thereby, the feeding of the aquatic species can be separately stimulated in the plurality of feeding zones. For instance, the feed may be provided in multiple temporally separated bursts (or "pulses") such that - after respective delays - feed may be present in two or more of the plurality of feedings zones simultaneously, facilitating simultaneously feeding the aquatic species in the two or more of the plurality of feeding zones.

Hence, in embodiments, especially in the feed providing stage, the feed providing system may (be configured to) sequentially provide bursts of feed to the basin. Especially, in such embodiments, the time delay may be selected such that the feed has reached at least one, such as at least two, especially all, of the plurality of feeding zones.

As indicated above, feed loss may particularly occur when the feed arrives at the bottom of the basin. Hence, in embodiments, the aquaculture system may especially be configured to stimulate feeding near the bottom of the basin. For instance, in embodiments, in the operational mode, a first subset of the light generating devices may provide the system light with sequentially alternating polarization states, whereas a second subset of the light generating devices may provide system light with a single polarization state, wherein the first subset of the light generating devices are (on average) arranged to illuminate the basin at a larger depth that the second subset of the light generating devise.

In further embodiments, in the operational mode, the light generating system may be configured to provide the system light according to a gradient, especially according to a gradient as a function of height in the basin, wherein the time periods of the at least part of the M different polarization states (or frequency f) varies along the gradient. Thereby, the aquaculture system may stimulate the aquatic species to feed at different heights.

In further embodiments, especially in the operational mode, the light generating system may be configured to temporally vary the frequency f. For instance, a relatively low polarization frequency may be used to start to attract the aquatic species and distribute them over the basin. When the fish are distributed the polarization frequency may increase, such as by providing higher polarization frequencies that are duty cycling spatially.

In further embodiments, the light generating system may (be configured to) provide bursts of polarization changes at different locations in the basin, which may facilitate distributing the aquatic species over the basin. For example, the light generating system may provide a (short) burst of polarization changes at a first location and sequentially a (short) burst of polarization changes at a second location.

As described above, the operational mode may be initiated after a time delay, which may, for instance, be based on an (estimated) sinking rate of the feed.

In further embodiments, the aquaculture system may further comprise a sensor system, wherein the sensor system is configured to detect a feed location of the feed and to provide a corresponding (or "related") (feed) location signal to the control system. Especially, in such embodiments, the control system may be configured to select the time delay based on the (feed) location signal. In particular, the control system may be configured to (have the light generating system) execute the operational mode based on the (feed) location signal, such as when the feed has reached a predetermined location.

In further embodiments, the sensor system may further be configured to detect an aquatic species location (of the aquatic species), especially an aquatic animal location, and to provide a corresponding (species) location signal to the control system. Especially, in such embodiments, the control system may be configured to control (the light generating system to control) the system light based on the (species) location signal. For instance, if the aquatic species are relatively clustered, the control system may employ the system light to stimulate the distribution of the aquatic species throughout the basin.

In further embodiments, the sensor system may be configured to detect radiation and to determine a polarization status of the detected radiation. In particular, in such embodiments, the sensor system may, especially while the light generating system sequentially changes the polarization states of the system light, have enhanced detection of the feed and/or the aquatic species. Hence, in embodiments, the sensor system may be configured to detect the feed location and/or the aquatic species location by detecting radiation and determining a polarization status of the detected radiation. In further embodiments, the sensor system may be configured to detect radiation having a predefined polarization status.

In embodiments, the feeding mode, especially the feeding stage, may have a feeding duration selected from the range of ≥ 30s, such as ≥ 1 min, especially ≥ 3 min. In further embodiments, the feeding mode, especially the feeding stage, may have a feeding duration ≤ 60 min, such as ≤ 30 min, especially ≤ 10 min. Hence, the feeding mode, especially the operational mode, may comprise switching between the M polarization states of the system light for a feeding duration of, for instance, 1 - 10 min. For instance, in this example, with an (average) stage duration of 0.02 seconds, this would mean (about) 3000 - 30000 changes in polarization state during the feeding mode, especially during the operational mode.

In a further aspect, the invention provides according to claim 13 an aquaculture arrangement. The aquaculture arrangement comprises the aquaculture system according to the invention and feed. In particular, the feed may be selected to provide a sparkling effect (for an aquatic species) when sequentially exposed to system light having different polarization states.

For the feed, one or more applies of: the feed comprises a hydrophobic surface; the feed comprises a glossy surface; the feed is porous . In particular, the feed may have a feed optical property that contributes to specular reflection, such as a property resulting in an air pocket close to the feed, which air pocket may provide specular reflection.

In embodiments, a material may be (defined as) specularly reflective for radiation when under perpendicular radiation of the material at least 75% of the reflected light is specularly reflected; a material may be (defined as) diffusely reflective when under perpendicular radiation of the material more than 25% of the reflected light is diffusely reflected. Especially, herein the term "diffuse reflective" may e.g. imply that under perpendicular radiation of a material that is diffuse reflective (or has a diffuse reflective surface) with light, especially visible light, such as white light or blue light, less than 20%, such as less than 10%, like in the range of 10-0.1%, even more especially in the range of 5-0.1%, or even below 1%, may be specularly reflected. All other light that is reflected (at the surface or optionally in the bulk), is (essentially) diffusively reflected.

In a further aspect, the invention provides according to independent claim 14 a method for feeding an aquatic animal, in a basin. The method comprises a feed providing stage and a feeding stage. The feed providing stage comprises providing feed to the basin. The feeding stage comprises providing system light sequentially having M different polarization states to the basin, wherein M ≥ 2, and wherein at least part of the M different polarization states are provided consecutively for time periods selected from the range of 0.005 - 10 seconds.

In further embodiments, the feeding stage comprises varying between the M different polarization states of the system light according to a frequency f, especially wherein f is selected from the range of 0.1 - 100 Hz, such as from the range of 0.3 - 90 Hz, especially from the range of 0.5 - 80 Hz, such as from the range of 1 - 70 Hz.

In further embodiments, the feeding stage may be temporally arranged at a time delay after the (onset of the) feed providing stage, especially wherein the time delay is selected from the range of ≥ 10 seconds, such as ≥ 30 seconds, especially ≥ 60 seconds.

In further embodiments, the method, especially the feeding stage, may comprise providing the system light during N sequential stages. In particular, the method may comprise providing the system light during each of the N different stages with one of the M different polarization states. The N sequential stages may temporally be arranged to directly follow on one another (successively), but may also be temporally arranged with one or more intermittent pauses, especially during which (essentially) no system light is provided. In particular, in embodiments, the method may comprise providing system light with different polarization states in temporally adjoining stages of the N sequential stages.

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment of the system describing actions of (a stage in) an operational mode may indicate that the method may, in embodiments, comprise those actions.

In a specific embodiment, the light source comprises a solid state LED light source (such as a LED or laser diode).

The term "light source" may also relate to a plurality of light sources, such as 2-20 (solid state) LED light sources. Hence, the term LED may also refer to a plurality of LEDs.

An aquaculture system for hosting an aquatic animal may comprise (i) a basin configured to host water and the aquatic animal, and a light generating system configured to provide system light to the basin, wherein the system light has controllable polarization, and wherein in an operational mode of the light generating system the light generating system is configured to provide system light with alternating polarization states. Said polarization states may for example be at least two different polarization states. In an embodiment, said aquaculture system may further be configured to obtain a feed optical property of a feed associated with the aquatic animal, wherein in the operational mode the light generating system is configured to control the system light based on the feed optical property. For example, the light generating system may be configured to select a plurality of polarization states based on the feed optical property and control the system light with alternating said plurality of polarization states that are selected based on the feed optical property.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig.1 schematically depicts an embodiment of the aquaculture system of the invention.
Fig. 2 schematically depicts an example operation of the aquaculture system.

The schematic drawings are not necessarily on scale.

### DETAILED DESCRIPTION OF THE EMBODIMENTS

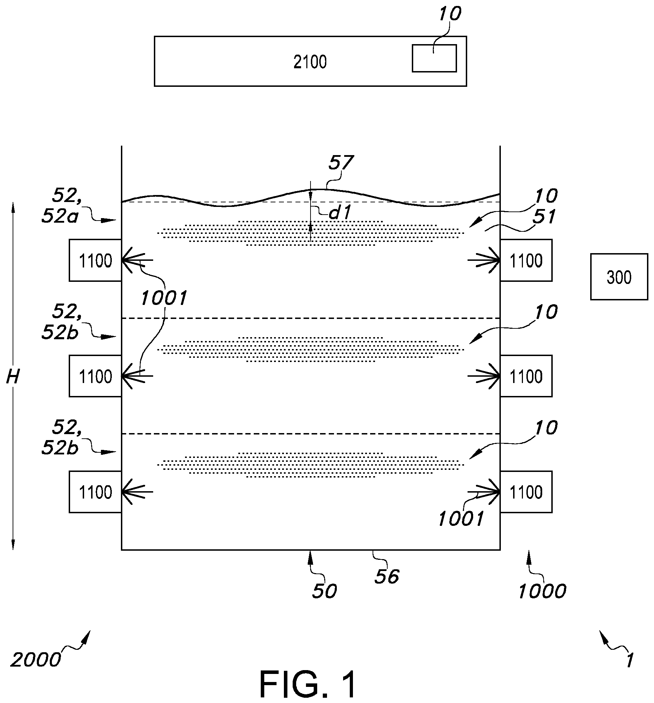

Fig. 1 schematically depicts an embodiment of the aquaculture system 2000 for hosting an aquatic species, especially an aquatic animal. In the depicted embodiment, the aquaculture system 2000 comprises a basin 50 configured to host water 51 and the aquatic species, especially the aquatic animal, and a light generating system 1000 configured to provide system light 1001 to (the water 51 in) the basin 50. In particular, the system light 1001 may have controllable polarization, i.e., the light generating system 1000 may be configured to control the polarization of the system light 1001.

The light generating system may have an operational mode for providing the system light with varying polarization states.

In particular, in embodiments, especially in the operational mode, the light generating system 1000 may (be configured to) provide system light 1001 sequentially having M different polarization states, especially wherein M ≥ 2, such as ≥3, especially ≥5. In further embodiments, at least part of the M different polarization states may be provided consecutively for time periods selected from the range of 0.005 - 10 seconds.

In embodiments, especially in the operational mode, the light generating system 1000 may be configured to switch between the M different polarization states of the system light 1001 according to a frequency f, especially wherein f is selected from the range of 0.1 - 100 Hz, such as from the range of 0.3 - 90 Hz, especially from the range of 0.5 - 80 Hz, such as from the range of 1 - 70 Hz.

The aquaculture system 2000 may be configured to host a specific aquatic species, such as an aquatic animal. Hence, the frequency f may be selected in view of the critical flicker frequency CFF of the aquatic species. In particular, in embodiments, the aquatic animal may have a critical flicker frequency CFF, wherein f < CFF.

For instance, in embodiments, the aquaculture system 2000, especially the basin 50, may be configured for hosting an aquatic animal, especially an aquatic animal selected from the group comprising a fish, a crustacean, and a cephalopod, such as a fish.

In the depicted embodiment, the aquaculture system 2000 further comprises a feed providing system 2100, wherein the feed providing system 2100 is configured to provide feed 10 to (water 51 in) the basin 50.

In particular, in embodiments, the aquaculture system 2000 may (be configured to) acquire a feed optical property of feed 10, especially of the feed 10 in the basin 50, or especially of feed planned (or "scheduled") to be provided to the basin 50, or especially of the feed 10 in the feed providing system 2100. In such embodiments, especially in the operational mode, the light generating system 1000 may (be configured to) control the system light based on the feed optical property.

For many types of feed 10, exposure of the feed 10 to system light having sequentially changing polarization states may result in a visual effect, such as a sparkling effect, that may be observed by the aquatic species, such as the aquatic animal. However, some feed may have optical properties that provide (relatively) little, or even (essentially) no visual effect as a result of the changing polarization state.

Hence, in further embodiments, the aquaculture system 2000, especially the feed providing system 2100, may be configured to provide a modification to the feed 10, especially wherein the modification changes a feed optical property of the feed 10. The modification may especially be selected from the group comprising a coating, a surface smoothening, a bulk composition, and a porosity increase.

In further embodiments, the aquaculture system may comprise a control system 300. The control system may especially be configured to control the light generating system 1000 and/or the feed providing system 2100, especially at least the light generating system 1000, or especially at least the feed providing system 2100.

In embodiments, the aquaculture system 2000 may further have a feeding mode. The feeding mode may especially comprise a feed providing stage and a feeding stage. In particular, in the feed providing stage, the feed providing system 2100 may (be configured to) provide the feed 10 to the basin 50. In the feeding stage, the light generating system 1000 may especially (be configured to) operate according to the operational mode.

In further embodiments, the feeding stage may be temporally arranged at a time delay after the (onset of the) feed providing stage, especially wherein the time delay is selected from the range of ≥ 30 seconds.

Hence, in embodiments, the light generating system 1000 may (be configured to) provide the system light sequentially having M different polarization states at a time delay after feeding, i.e., after feed is provided to the basin 50. The time delay may especially be selected in view of a sinking rate of the feed and/or a height H of the basin 50.

In the depicted embodiment, the basin 50 is divided into a plurality of spatially separated feeding zones 52 along a height (H) of the basin 50. In addition, in the depicted embodiment, the light generating system 1000 comprises a plurality of light generating devices 1100 arranged to provide system light 1001 to the plurality of feeding zones 52. The light generating devices 1100 may especially be operated individually or in proper subsets, such as proper subsets grouped by position along the height H of the basin 50.

In particular, in the depicted embodiment, the basin 50 may be divided into a first subset of feeding zones 52a and a second subset of feeding zones 52b, wherein the first subset of feeding zones 52a are arranged closer to a water surface 57 of the basin 50, and wherein the second subset of feeding zones 52b are arranged closer to a floor 56 of the basin 50.

As described above, for instance in view of sea lice, it may, for instance depending on the presence of sea lice, be preferable to stimulate feeding by the aquatic species at a relatively larger depth, such as in the second subset of feeding zones 52b. Hence, the light generating system 1000 may be configured to, especially in the feeding mode, provide system light 1001 with a subset of the light generating devices 1100 to stimulate feeding in the second subset of feeding zones 52b.

In further embodiments, a top feeding zone may be arranged at a first distance d1 from the water surface 57, especially wherein the first distance is selected in view of the depth at which surface-bound pathogens/parasites are (essentially) not found.

Thereby, different feeding zones 52 may be selectively illuminated with system light 1001 by the lighting devices 1100 of the light generating system 1000, which may facilitate distributing the aquatic species across the basin 50, such as by stimulating feeding in multiple feeding zones 52 in the basin 50.

In further embodiments, especially in the feed providing stage, the feed providing system 2100 may (be configured to) sequentially provide bursts of feed 10 to the basin 50, and the time delay may especially be selected such that the feed 10 has (already) reached at least one feeding zone 52, such as at least two feeding zones, especially all of the plurality of feeding zones 52.

In embodiments, the aquaculture system 2000 may further comprise a sensor system 1200, wherein the sensor system 1200 is configured to detect a feed location of the feed 10 and to provide a corresponding location signal to the control system 300. In such embodiments, the control system 300 may be configured to select the time delay based on the location signal. Alternatively or additionally, the control system 300 may be configured to initiate the operational mode (of the light generating system) once the feed 10 has reached a predefined location in the basin, such as a predefined feeding zone 52.

Fig. 1 further schematically depicts an aquaculture arrangement 1, wherein the aquaculture arrangement 1 comprises the aquaculture system 2000 according to the invention and the feed 10.

Fig. 1 further schematically depicts an embodiment of the method for feeding an aquatic animal in a basin 50. The method may especially comprise: a feed providing stage comprising providing feed 10 to the basin 50; and a feeding stage comprising providing system light 1001 sequentially having M different polarization states to the basin 50, especially wherein M ≥ 2, and especially wherein at least part of the M different polarization states are provided consecutively for time periods selected from the range of 0.005 - 10 seconds.

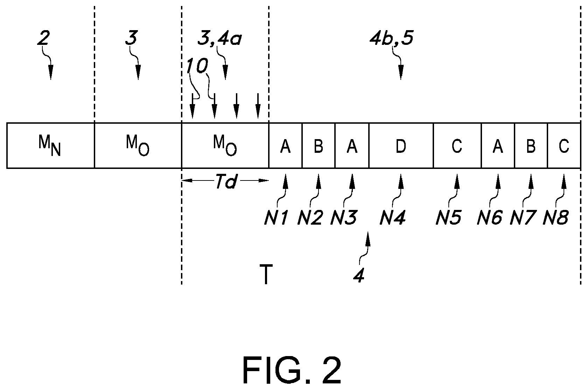

Fig. 2 schematically depicts an example operation of the aquaculture system 2000. In particular, Fig. 2 schematically depicts an example of different modes of the light generating system 1000 temporally arranged in time T. Specifically, in the depicted example, the light generating system, especially the control system, sequentially executes a night mode 2, a general lighting mode 3, and the operational mode 5 of the light generating system 1000. In addition, fig. 2 schematically depicts a feeding mode 4 of the aquaculture system 2000, especially of the control system 300.

In embodiments, especially in the operational mode, the light generating system 1000 may (be configured to) provide the system light 1001 during N sequential stages, especially wherein the light generating system 1000 is configured to during each of the N different stages provide the system light 1001 with one of the M different polarization states. Hence, during each of the N sequential stages, the light generating system 1000 may provide system light having a specific polarization state of the M polarization states, but different polarization states of the M polarization states may be selected for different stages of the N sequential stages. In particular, a set of temporally adjoining stages of the N sequential stages, especially each set of temporally adjoining stages of the N sequential stages, may have different polarization states of the M polarization states.

Fig. 2 schematically depicts an operational mode 5 with 8 sequential stages (N1,N2,N3,N4,N5,N6,N7,N8) during which four different polarization states (A,B,C,D) are employed. For instance, in states N1, N3 and N6 the system light 1001 has polarization state A.

In the example in Fig. 2, successively arranged stages have different polarization states. As mentioned above, a polarization state may also relate to (essentially) unpolarized system light. Hence, for instance, "A" could refer to unpolarized system light, and "B", "C" and "D" could refer to system light which differ in their polarization, such as in their polarization direction and/or polarization type.

In further embodiments, the number of polarization states and the number of sequential stages may be identical, i.e., M=N. However, in general, as in Fig. 2, N and M may differ, such as, in embodiments, N>M.

In further embodiments, (at least some of the stages of) the N sequential stages, especially each stage of the N sequential stages, may have time periods independently (or "individually") selected from the range of 0.005 - 10 seconds, such as from the range of 0.01 - 5 seconds, especially from the range of 0.02 - 4 seconds. In further embodiments, the time periods may be at least 0.005 seconds, such as at least 0.01 seconds, especially at least 0.02 seconds, such as at least 0.03 seconds, especially at least 0.05 seconds. In further embodiments, the time periods may be at most 10 seconds, such as at most 7 seconds, especially at most 5 seconds, such as at most 4 seconds, especially at most 3 seconds. In further embodiments, the time periods may be at most 2 seconds, such as at most 1.5 seconds, especially at most 1 second, such as at most 0.5 seconds. In specific embodiments, the time periods may be selected from the range of 0.01 - 2 seconds.

Hence, the different stages of the N sequential stages may have different time periods, such as schematically depicted in Fig. 2.

Besides the operational mode 5, the light generating system 1000 may also have a general lighting mode 3. The general lighting mode may comprise providing general system light 1001 to (water in) the basin, such as system light 1001 having a default polarization state (such as the system light being unpolarized). Hence, in embodiments, the control system 300 may be configured to switch the light generating system 1000 between the general lighting mode 3 and the operational mode 5.

In the general lighting mode 3, the light generating system 1000 may especially provide system light 1000 having a default polarization state M₀, such as system light 1001 comprising (essentially) unpolarized light.

In the depicted example, the aquaculture system 2000, especially the control system 300, has a feeding mode 4. The feeding mode 4 may especially comprise a feed providing stage 4a and a feeding stage 4b. In particular, in the feed providing stage 4a, the feed providing system 2100 may (be configured to) provide the feed 10 to the basin 50, represented in Fig. 2 by the arrows. In the feeding stage 4b, the light generating system 1000 may especially (be configured to) operate according to the operational mode 5. However, in the feed providing stage 4a, the light generating system 1000 may especially (be configured to) operate according to the general lighting mode 3.

In further embodiments, the feeding stage 4b may be temporally arranged at a time delay t_{d} after the (onset of the) feed providing stage 4a, or especially after the (onset of the) last feeding event of the feed providing stage 4a, especially wherein the time delay t_{d} is selected from the range of ≥ 30 seconds.

In addition, as depicted in Fig. 2, the light generating system 1000 may further have a night mode 2. Especially, during the night mode 2, the light generating system 1000 may (be configured to) provide system light 1001 having a reduced intensity, such as essentially no system light 1001, to the basin 50 relative to the general lighting mode 3 and/or the operational mode 5.

The term "plurality" refers to two or more. Furthermore, the terms "a plurality of" and "a number of" may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the invention as defined by the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

## Claims

1. An aquaculture system (2000) for hosting an aquatic animal, the aquaculture system (2000) comprising (i) a basin (50) configured to host water (51) and the aquatic animal, and (ii) a light generating system (1000) configured to provide system light (1001) to the basin (50), **characterized in that** the system light (1001) has controllable polarization, and wherein in an operational mode of the light generating system (1000) the light generating system (1000) is configured to provide system light (1001) sequentially having M different polarization states, wherein M ≥ 2, and wherein at least part of the M different polarization states are provided consecutively for time periods individually selected from the range of 0.005 - 10 seconds.

2. The aquaculture system (2000) according to claim 1, wherein in the operational mode the light generating system (1000) is configured to provide the system light (1001) during N sequential stages, wherein the light generating system (1000) is configured to provide during each of the N different stages the system light (1001) with one of the M different polarization states, wherein the N sequential stages have time periods individually selected from the range of 0.01 - 2 seconds.

3. The aquaculture system (2000) according to any one of the preceding claims, wherein the lighting system (1000) comprises a rotating polarizer, wherein the rotating polarizer is configured to control the polarization of the system light (1001), wherein in the operational mode the light generating system (1000) is configured to switch between the M different polarization states of the system light (1001) according to a frequency f, wherein f is selected from the range of 0.2 - 90 Hz.

4. The aquaculture system (2000) according to claim 3, wherein the aquaculture system (2000) is configured for hosting a fish, wherein the aquatic animal has a critical flicker frequency CFF, wherein f < CFF, wherein one applies of:
- the aquatic animal comprises a yellowfin tuna, and f is selected from the range of < 80 Hz;
- the aquatic animal comprises a European eel, wherein f is selected from the range of < 14 Hz;
- the aquatic animal comprises a bass, wherein f is selected from the range of < 75 Hz.

5. The aquaculture system (2000) according to any one of the preceding claims, wherein the M polarization states comprise a first polarization state P1 and a second polarization state P2, wherein the first polarization state P1 and the second polarization state P2 differ in one or more of (i) direction of polarization and (ii) type of polarization.

6. The aquaculture system (2000) according to any one of the preceding claims, wherein the aquaculture system (2000) further comprises a feed providing system (2100), wherein the feed providing system (2100) is configured to provide feed (10) to the basin (50).

7. The aquaculture system (2000) according to claim 6, wherein the aquaculture system (2000) is configured to acquire a feed optical property of the feed (10), and wherein in the operational mode the light generating system (1000) is configured to control the system light based on the feed optical property.

8. The aquaculture system (2000) according to any one of the preceding claims 6-7, wherein the feed providing system (2100) is configured to provide a modification to the feed (10), wherein the modification is selected from the group comprising a coating, a surface smoothening, a bulk composition, and a porosity increase.

9. The aquaculture system (2000) according to any one of the preceding claims 6-8, wherein the aquaculture system comprises a control system (300), wherein the control system (300) is configured to control the light generating system (1000), and wherein the aquaculture system (2000) has a feeding mode, wherein the feeding mode comprises:
- a feed providing stage wherein the feed providing system (2100) is configured to provide the feed (10) to the basin (50);
- a feeding stage wherein the light generating system (1000) is configured to operate according to the operational mode.

10. The aquaculture system (2000) according to claim 9, wherein the feeding stage is temporally arranged at a time delay after the feed providing stage, wherein the time delay is selected from the range of ≥ 30 seconds.

11. The aquaculture system (2000) according to claims 10, wherein the basin (50) is divided into a plurality of feeding zones (52) along a height (H) of the basin (50), wherein the light generating system (1000) comprises a plurality of light generating devices (1100) arranged to provide system light (1001) to the plurality of feeding zones (52), and wherein the time delay is selected such that the feed (10) has reached at least two of the plurality of feeding zones (52).

12. The aquaculture system (2000) according to any one of the preceding claims 10-11, wherein the aquaculture system (2000) comprises a sensor system (1200), wherein the sensor system (1200) is configured to detect a feed location of the feed (10) and to provide a corresponding location signal to the control system (300), wherein the control system (300) is configured to have the light generating system execute the operational mode when the feed has reached a predetermined location.

13. An aquaculture arrangement (1), wherein the aquaculture arrangement (1) comprises (i) the aquaculture system (2000) according to any one of the preceding claims and (ii) feed (10), wherein for the feed (10) one or more applies of:
- the feed (10) comprises a hydrophobic surface;
- the feed (10) comprises a glossy surface;
- the feed (10) is porous.

14. A method for feeding an aquatic animal in a basin (50), wherein the method comprises:
- a feed providing stage comprising providing feed (10) to the basin (50);
- a feeding stage comprising providing system light (1001) sequentially having M different polarization states to the basin (50), wherein M ≥ 2, and wherein at least part of the M different polarization states are provided consecutively for time periods selected from the range of 0.005 - 10 seconds.

15. The method according to claim 14, wherein the feeding stage comprises varying between the M different polarization states of the system light (1001) according to a frequency f, wherein f is selected from the range of 0.5 - 90 Hz, and wherein the feeding stage is temporally arranged at a time delay after the feed providing stage, wherein the time delay is selected from the range of ≥ 30 seconds; and wherein the aquatic animal comprises a fish selected from the group comprising carp, salmon, tuna, tilapia, seabass, seabream, and catfish.

## Patentansprüche

1. Aquakultursystem (2000) zum Aufnehmen eines Wassertiers, das Aquakultursystem (2000) umfassend (i) ein Becken (50), das konfiguriert ist, um Wasser (51) und das Wassertier aufzunehmen, und (ii) ein Lichterzeugungssystem (1000), das konfiguriert ist, um dem Becken (50) Systemlicht (1001) bereitzustellen, **dadurch gekennzeichnet, dass** das Systemlicht (1001) eine steuerbare Polarisation aufweist, und wobei, in einem Betriebsmodus des Lichterzeugungssystems (1000), das Lichterzeugungssystem (1000) konfiguriert ist, um Systemlicht (1001) sequentiell bereitzustellen, das M unterschiedliche Polarisationszustände aufweist, wobei M ≥ 2, und wobei mindestens ein Teil der M unterschiedlichen Polarisationszustände nacheinander für Zeiträume bereitgestellt wird, die einzeln aus dem Bereich von 0,005-10 Sekunden ausgewählt sind.

2. Aquakultursystem (2000) nach Anspruch 1, wobei, in dem Betriebsmodus, das Lichterzeugungssystem (1000) konfiguriert ist, um das Systemlicht (1001) während N aufeinanderfolgender Phasen bereitzustellen, wobei das Lichterzeugungssystem (1000) konfiguriert ist, um während jeder der N unterschiedlichen Phasen das Systemlicht (1001) mit einem der M unterschiedlichen Polarisationszustände bereitzustellen, wobei die N aufeinanderfolgenden Phasen Zeiträume aufweisen, die einzeln aus dem Bereich von 0,01-2 Sekunden ausgewählt sind.

3. Aquakultursystem (2000) nach einem der vorstehenden Ansprüche, wobei das Beleuchtungssystem (1000) einen rotierenden Polarisator umfasst, wobei der rotierende Polarisator konfiguriert ist, um die Polarisation des Systemlichts (1001) zu steuern, wobei, in dem Betriebsmodus, das Lichterzeugungssystem (1000) konfiguriert ist, um zwischen den M unterschiedlichen Polarisationszuständen des Systemlichts (1001) gemäß einer Frequenz f umzuschalten, wobei f aus dem Bereich von 0,2-90 Hz ausgewählt ist.

4. Aquakultursystem (2000) nach Anspruch 3, wobei das Aquakultursystem (2000) zum Aufnehmen eines Fisches konfiguriert ist, wobei das Wassertier eine kritische Flimmerfrequenz CFF aufweist, wobei f < CFF, wobei eines gilt von:
- das Wassertier umfasst einen Gelbflossenthunfisch und f ist aus dem Bereich < 80 Hz ausgewählt;
- das Wassertier umfasst einen europäischen Aal, wobei f aus dem Bereich von < 14 Hz ausgewählt ist;
- das Wassertier umfasst einen Barsch, wobei f aus dem Bereich < 75 Hz ausgewählt ist.

5. Aquakultursystem (2000) nach einem der vorstehenden Ansprüche, wobei die M Polarisationszustände einen ersten Polarisationszustand P1 und einen zweiten Polarisationszustand P2 umfassen, wobei sich der erste Polarisationszustand P1 und der zweite Polarisationszustand P2 in einem oder mehreren unterscheiden von (i) Polarisationsrichtung und (ii) Polarisationstyp.

6. Aquakultursystem (2000) nach einem der vorstehenden Ansprüche, wobei das Aquakultursystem (2000) ferner ein Futterbereitstellungssystem (2100) umfasst, wobei das Futterbereitstellungssystem (2100) konfiguriert ist, um dem Becken (50) Futter (10) bereitzustellen.

7. Aquakultursystem (2000) nach Anspruch 6, wobei das Aquakultursystem (2000) konfiguriert ist, um eine optische Futtereigenschaft des Futters (10) zu erfassen, und wobei, in dem Betriebsmodus, das Lichterzeugungssystem (1000) konfiguriert ist, um das Systemlicht basierend auf der optischen Futtereigenschaft zu steuern.

8. Aquakultursystem (2000) nach einem der vorstehenden Ansprüche 6 bis 7, wobei das Futterbereitstellungssystem (2100) konfiguriert ist, dem Futter (10) eine Modifikation bereitzustellen, wobei die Modifikation aus der Gruppe ausgewählt ist, umfassend eine Beschichtung, eine Oberflächenglättung, eine Massenzusammensetzung und eine Erhöhung der Porosität.

9. Aquakultursystem (2000) nach einem der vorstehenden Ansprüche 6 bis 8, wobei das Aquakultursystem ein Steuersystem (300) umfasst, wobei das Steuersystem (300) konfiguriert ist, um das Lichterzeugungssystem (1000) zu steuern, und wobei das Aquakultursystem (2000) einen Fütterungsmodus aufweist, wobei der Fütterungsmodus umfasst:
- eine Futterbereitstellungsphase, wobei das Futterbereitstellungssystem (2100) konfiguriert ist, um dem Becken (50) das Futter (10) bereitzustellen;
- eine Fütterungsphase, wobei das Lichterzeugungssystem (1000) konfiguriert ist, um gemäß dem Betriebsmodus betrieben zu werden.

10. Aquakultursystem (2000) nach Anspruch 9, wobei die Fütterungsphase zeitlich mit einer Zeitverzögerung nach der Futterbereitstellungsphase angeordnet ist, wobei die Zeitverzögerung aus dem Bereich von ≥ 30 Sekunden ausgewählt ist.

11. Aquakultursystem (2000) nach Anspruch 10, wobei das Becken (50) in eine Vielzahl von Fütterungszonen (52) entlang einer Höhe (H) des Beckens (50) unterteilt ist, wobei das Lichterzeugungssystem (1000) eine Vielzahl von Lichterzeugungsvorrichtungen (1100) umfasst, die angeordnet sind, um der Vielzahl von Fütterungszonen (52) Systemlicht (1001) bereitzustellen, und wobei die Zeitverzögerung derart ausgewählt ist, dass das Futter (10) mindestens zwei der Vielzahl von Fütterungszonen (52) erreicht hat.

12. Aquakultursystem (2000) nach einem der vorstehenden Ansprüche 10 bis 11, wobei das Aquakultursystem (2000) ein Sensorsystem (1200) umfasst, wobei das Sensorsystem (1200) konfiguriert ist, um einen Fütterungsort des Futters (10) zu erkennen und dem Steuersystem (300) ein entsprechendes Ortsignal bereitzustellen, wobei das Steuersystem (300) konfiguriert ist, um das Lichterzeugungssystem den Betriebsmodus ausführen zu lassen, wenn das Futter einen zuvor bestimmten Ort erreicht hat.

13. Aquakulturanordnung (1), wobei die Aquakulturanordnung (1) (i) das Aquakultursystem (2000) nach einem der vorstehenden Ansprüche und (ii) Futter (10) umfasst, wobei für das Futter (10) eines oder mehrere gilt von:
- das Futter (10) umfasst eine hydrophobe Oberfläche;
- das Futter (10) umfasst eine glänzende Oberfläche;
- das Futter (10) ist porös.

14. Verfahren zum Füttern eines Wassertiers in einem Becken (50), wobei das Verfahren umfasst:
- eine Futterbereitstellungsphase, umfassend das Bereitstellen von Futter (10) für das Becken (50);
- eine Fütterungsphase, umfassend das sequentielle Bereitstellen von Systemlicht (1001), das M unterschiedliche Polarisationszustände aufweist, an das Becken (50), wobei M ≥ 2, und wobei mindestens ein Teil der M unterschiedlichen Polarisationszustände nacheinander für Zeiträume bereitgestellt wird, die aus dem Bereich von 0,005-10 Sekunden ausgewählt sind.

15. Verfahren nach Anspruch 14, wobei die Fütterungsphase ein Variieren zwischen den M unterschiedlichen Polarisationszuständen des Systemlichts (1001) gemäß einer Frequenz f umfasst, wobei f aus dem Bereich von 0,5-90 Hz ausgewählt ist, und wobei die Fütterungsphase zeitlich mit einer Zeitverzögerung nach der Futterbereitstellungsphase angeordnet ist, wobei die Zeitverzögerung aus dem Bereich von ≥ 30 Sekunden ausgewählt ist; und wobei das Wassertier einen Fisch umfasst, der aus der Gruppe ausgewählt ist, umfassend Karpfen, Lachs, Thunfisch, Tilapia, Wolfsbarsch, Seebrasse und Wels.

## Revendications

1. Système d'aquaculture (2000) permettant d'accueillir un animal aquatique, le système d'aquaculture (2000) comprenant (i) un bassin (50) conçu pour accueillir de l'eau (51) et l'animal aquatique, et (ii) un système générateur de lumière (1000) configuré pour fournir de la lumière de système (1001) au bassin (50),
**caractérisé en ce que** la lumière de système (1001) a une polarisation commandable, et dans lequel dans un mode fonctionnel du système générateur de lumière (1000) le système générateur de lumière (1000) est configuré pour fournir de la lumière de système (1001) ayant séquentiellement M états de polarisation différents, dans lequel M ≥ 2, et dans lequel au moins une partie des M états de polarisation différents sont fournis consécutivement pendant des laps de temps individuellement choisis dans la plage de 0,005 à 10 secondes.

2. Système d'aquaculture (2000) selon la revendication 1, dans lequel dans le mode fonctionnel le système générateur de lumière (1000) est configuré pour fournir la lumière de système (1001) pendant N phases séquentielles, dans lequel le système générateur de lumière (1000) est configuré pour fournir pendant chacune des N phases différentes, à la lumière de système (1001), l'un des M états de polarisation différents, dans lequel les N phases séquentielles ont des laps de temps individuellement choisis dans la plage de 0,01 à 2 secondes.

3. Système d'aquaculture (2000) selon l'une quelconque des revendications précédentes, dans lequel le système d'éclairage (1000) comprend un polariseur rotatif, dans lequel le polariseur rotatif est configuré pour commander la polarisation de la lumière de système (1001), dans lequel dans le mode fonctionnel le système générateur de lumière (1000) est configuré pour commuter entre les M états de polarisation différents de la lumière de système (1001) selon une fréquence f, dans lequel f est choisie dans la plage de 0,2 à 90 Hz.

4. Système d'aquaculture (2000) selon la revendication 3, dans lequel le système d'aquaculture (2000) est configuré pour accueillir un poisson, dans lequel l'animal aquatique a une fréquence de scintillement critique CFF, dans lequel f < CFF, dans lequel l'un s'applique parmi :
- l'animal aquatique comprend un thon albacore, et f est choisie dans la plage de < 80 Hz ;
- l'animal aquatique comprend une anguille européenne, dans lequel f est choisie dans la plage de < 14 Hz ;
- l'animal aquatique comprend un bar, dans lequel f est choisie dans la plage de < 75 Hz.

5. Système d'aquaculture (2000) selon l'une quelconque des revendications précédentes, dans lequel les M états de polarisation comprennent un premier état de polarisation P1 et un second état de polarisation P2, dans lequel le premier état de polarisation P1 et le second état de polarisation P2 diffèrent dans un ou plusieurs parmi (i) direction de polarisation et (ii) type de polarisation.

6. Système d'aquaculture (2000) selon l'une quelconque des revendications précédentes, dans lequel le système d'aquaculture (2000) comprend en outre un système de fourniture de nourriture (2100), dans lequel le système de fourniture de nourriture (2100) est configuré pour fournir de la nourriture (10) au bassin (50).

7. Système d'aquaculture (2000) selon la revendication 6, dans lequel le système d'aquaculture (2000) est configuré pour acquérir une propriété optique de nourriture de la nourriture (10), et dans lequel dans le mode fonctionnel le système générateur de lumière (1000) est configuré pour commander la lumière de système en fonction de la propriété optique de nourriture.

8. Système d'aquaculture (2000) selon l'une quelconque des revendications précédentes 6 à 7, dans lequel le système de fourniture de nourriture (2100) est configuré pour fournir une modification à la nourriture (10), dans lequel la modification est choisie dans le groupe comprenant un enrobage, un lissage de surface, une composition en vrac et une augmentation de porosité.

9. Système d'aquaculture (2000) selon l'une quelconque des revendications précédentes 6 à 8, dans lequel le système d'aquaculture comprend un système de commande (300), dans lequel le système de commande (300) est configuré pour commander le système générateur de lumière (1000), et dans lequel le système d'aquaculture (2000) a un mode de nourrissage, dans lequel le mode de nourrissage comprend :
- une phase de fourniture de nourriture dans laquelle le système de fourniture de nourriture (2100) est configuré pour fournir la nourriture (10) au bassin (50) ;
- une phase de nourrissage dans laquelle le système générateur de lumière (1000) est configuré pour fonctionner selon le mode fonctionnel.

10. Système d'aquaculture (2000) selon la revendication 9, dans lequel la phase de nourrissage est agencée temporellement à un délai de temporisation après la phase de fourniture de nourriture, dans lequel le délai de temporisation est choisi dans la plage de ≥ 30 secondes.

11. Système d'aquaculture (2000) selon les revendications 10, dans lequel le bassin (50) est divisé en une pluralité de zones de nourrissage (52) le long d'une hauteur (H) du bassin (50), dans lequel le système générateur de lumière (1000) comprend une pluralité de dispositifs générateurs de lumière (1100) agencés pour fournir de la lumière de système (1001) à la pluralité de zones de nourrissage (52), et dans lequel le délai de temporisation est choisi de telle sorte que la nourriture (10) a atteint au moins deux parmi la pluralité de zones de nourrissage (52).

12. Système d'aquaculture (2000) selon l'une quelconque des revendications 10 à 11 précédentes, dans lequel le système d'aquaculture (2000) comprend un système de capteur (1200), dans lequel le système de capteur (1200) est configuré pour détecter une localisation de nourriture de la nourriture (10) et pour fournir un signal de localisation correspondant au système de commande (300), dans lequel le système de commande (300) est configuré pour amener le système générateur de lumière à exécuter le mode fonctionnel lorsque la nourriture a atteint une localisation prédéterminée.

13. Agencement d'aquaculture (1), dans lequel l'agencement d'aquaculture (1) comprend (i) le système d'aquaculture (2000) selon l'une quelconque des revendications précédentes et (ii) de la nourriture (10), dans lequel pour la nourriture (10) un ou plusieurs s'appliquent parmi :
- la nourriture (10) comprend une surface hydrophobe ;
- la nourriture (10) comprend une surface brillante ;
- la nourriture (10) est poreuse.

14. Procédé permettant de nourrir un animal aquatique dans un bassin (50), dans lequel le procédé comprend :
- une phase de fourniture de nourriture comprenant la fourniture de nourriture (10) au bassin (50) ;
- une phase de nourrissage comprenant la fourniture de lumière de système (1001) ayant séquentiellement M états de polarisation différents au bassin (50), dans lequel M ≥ 2, et dans lequel au moins une partie des M états de polarisation différents sont fournis consécutivement pendant des laps de temps choisis dans la plage de 0,005 à 10 secondes.

15. Procédé selon la revendication 14, dans lequel la phase de nourrissage comprend une variation entre les M états de polarisation différents de la lumière de système (1001) selon une fréquence f, dans lequel f est choisi dans la plage de 0,5 à 90 Hz, et dans lequel la phase de nourrissage est agencée temporellement à un délai de temporisation après la phase de furniture de nourriture, dans lequel le délai de temporisation est choisi dans la plage de ≥ 30 secondes ; et dans lequel l'animal aquatique comprend un poisson choisi dans le groupe comprenant carpe, saumon, thon, tilapia, bar, dorade et poisson-chat.
